# EUROPEAN PATENT SPECIFICATION

(11) **EP 1 437 398 B1**
(45) Date of publication and mention of the grant of the patent: **01.09.2010**
(21) Application number: 02772909.4
(22) Date of filing: 25.09.2002
(51) Int. Cl.: C12C 12/00, C12C 7/28, C12C 11/11, C12H 1/04

(54) **PROCESS FOR PRODUCING FERMENTED MALT DRINK WITH REDUCED PURINE CONTENT**
HERSTELLUNGSVERFAHREN FÜR EIN VERGORENES MALZGETRÄNK MIT VERRINGERTEM PURINGEHALT
PROCEDE DE PRODUCTION D'UNE BOISSON A BASE DE MALT FERMENTE A TENEUR DE PURINES REDUITE

(30) Priority: 27.09.2001 JP 2001298661; 02.05.2002 JP 2002130275
(43) Date of publication of application: 14.07.2004
(73) Proprietor: KIRIN BEER KABUSHIKI KAISHA, Chuo-Ku Tokyo 104-8288 (JP)
(72) Inventor: FUJINO, Shun'ichi, c/o KIRIN BEER KABUSHIKI KAISHA, Yokohama-shi, Kanagawa 2 Tokyo 104-8288 (JP); SAKUMA, Shuso, c/o KIRIN BEER KABUSHIKI KAISHA, Yokohama-shi, Kanagawa 2 Tokyo 104-8288 (JP)
(74) Representative: HOFFMANN EITLE
(86) International application number: PCT/JP2002/009880
(87) International publication number: WO 2003/029396

(56) References cited:
- EP-A1- 0 753 572
- GB-A- 1 454 311
- JP-A- 1 261 365
- JP-A- 50 048 197
- JP-A- 56 144 742
- BUDAY A.Z. ET AL.: 'The use of activated carbon for the recovery and concentration of nucleic acid derivatives and other compounds from biological samples' J. INT. CAN. SCI. TECHNOL. ALIMENT. vol. 7, no. 3, 1974, pages 188 - 198, XP002961337
- DATABASE FSTA IFIS [Online] CHARALAMBOUS G. ET AL.: 'Determination of beer flavor compounds by high pressure liquid chromatography. IV. Nucleotides', XP002961338 Retrieved from DIALOG Database accession no. 00119967 & TECHNICAL QUARTERLY, MASTER BREWERS ASSOCIATION OF AMERICA vol. 12, no. 4, 1975, pages 203 - 208

## Description

### Technical Field

The present invention relates to fermented malt beverages with reduced content of purine compounds and a process for producing the same. The present invention more particularly relates to a process to remove selectively or efficiently purine compounds from wort or fermented solution during the developing process of fermented malt beverages in the development of fermented malt beverages such as beer, low-malt beer and the like containing malt as a part or whole of the ingredient.

### Background Art

Approximately 40 - 100 mg/l of total purine compounds are present in beer. Purine compounds, such as purine bases (adenine, guanine, xanthine, etc.), purine nucleosides (adenosine, guanosine, inosine, etc.), purine nucleotides (adenylic acid, guanylic acid, inosinic acid, etc.), and their polymer nucleic acids are degraded into uric acids when ingested as diet. Ingestion of said purine compounds is sometimes restricted in the course of dietary restriction for hyperuricemia, and beer can also be a target of the dietary restriction in addition to the restriction of the food containing higher amount of purine compounds such as meat, egg, liver and the like. In such cases, as for beer and the like, products with reduced content of purine compounds are also expected.

Some attempts to reduce purine compounds in brewing have been reported. Domestic re-publication of PCT international publication (for patent applications) WO96/25483 discloses a brewing process wherein nucleoside phosphorylase and/or nucleosidase is activated in beer wort to degrade nucleoside in wort, and thus to reduce the concentration of purine compounds. In this process, purine nucleosides contained in wort are degraded to purine bases using an enzyme, said purine bases are assimilated to yeast in the fermentation step, and thus beer with reduced content of purine compounds is obtained in the brewing process. However, this process is affected by degradation rate of purine nucleosides (approximately 60% in the present examples), and by the assimilation rate by yeast of total amount of the developed purine bases and the purine bases that were originally present in wort, therefore, there is a limit to for the amount of reduction.

BUDAY A.Z. ET AL.: "The use of activated carbon for the recovery and concentration of nucleic acid derivatives and other compounds from biological samples" J. INT. CAN. SCI. TECHNOL. ALIMENT., vol. 7, no. 3, 1974 , pages 188-198, discloses the use of activated carbon for recovery and concentration of nucleic acid derivatives, eg guanine or guanosine, from biological samples, such as wort and beer.

GB 1 454 311 A discloses the treatment of beer with activated carbon in mixture with silicic acid, preferably finely powdered with particle size < 45 µm; to improve quality thereof.

Therefore, it is expected to develop an efficient and effective process for reducing purine compounds in order to satisfy the consumers' request who are anxious of the increase of blood uric acid level.

The object of the present invention is to provide fermented malt beverages with reduced content of purine compounds and a process for producing the same, or more particularly, to provide a process for removing selectively and efficiently purine compounds from wort or fermented solution during the developing process of fermented malt beverages in the production of fermented malt beverages such as beer, low-malt beer and the like, and fermented malt beverages with reduced content of purine compounds produced by said process.

As a result of keen study to solve the above-mentioned objects, the present inventors have found that during the production steps of fermented malt beverages such as beer, low-malt beer and the like, by treating purine compounds in wort or fermented solution with an adsorbent, particularly with activated charcoal, which adsorbs selectively purine compounds in wort or fermented solution, the purine compounds in wort of fermented solution can be adsorbed and removed selectively, and therefore it is possible to develop efficiently and effectively fermented malt beverages with reduced content of purine compounds. Thus, the present invention has been completed. As for the activated charcoal used in the present invention, one with average pore diameter of 1 - 3.5 nm is effectively used. As for the treatment method with an adsorbent, for example, a column treatment and a method for separating the adsorbent after the contact for a certain period of time is applied.

### Disclosure of the Invention

The present invention relates to: a process for producing fermented malt beverages with reduced content of purine compounds wherein purine compounds are selectively adsorbed and removed with an adsorbent which selectively adsorbs purine compounds in the production steps of as claimed fermented malt beverages

### Brief Description of Drawings

Fig. 1 is a drawing showing the relation of adsorption ability of purine compounds to activated charcoal with a different average pore diameter in the example of the present invention.
Fig. 2 is a drawing showing the results of measuring the adsorption ability of purine compounds in commercially available beer, by using powdery activated charcoal with a different average pore diameter in the example of the present invention.
Fig. 3 is a drawing showing the results of measuring the adsorption ability of purine compounds by changing the various amount added of activated charcoal for commercially available beer and low-malt beer in the example of the present invention.

### Best Mode of Carrying Out the Invention

The present invention relates to adsorb and remove selectively purine compounds with an adsorbent which selectively adsorbs purine compounds in the production steps of fermented malt beverages such as beer, low-malt beer and the like. As for the adsorbent which selectively adsorbs purine compounds, activated charcoal of which the average pore diameter of 1 - 3.5 nm is effectively used.

In the present invention, the treatment with an adsorbent to adsorb selectively purine compounds is carried out in the production steps of fermented malt beverages during and after the preparation step, and as for the method of treatment of the adsorbent, it can be carried out by contacting wort or fermented solution with the adsorbent by a column treatment or by a method for separating the adsorbent after the contact for a certain period of time. Furthermore, the treatment step with the adsorbent can be carried out accordingly being united with the filtration step of wort or the filtration step of fermented solution during ordinary production steps for fermented malt beverages. Particularly, such treatment can be advantageously carried out during the maturation step in the storage tank after the fermentation step in the production of fermented malt beverages is finished. For example, the treatment with an adsorbent by adding an adsorbent such as activated charcoal or the like can be carried out, when fermented malt beverages are moved into the storage tank after the young beer is transferred, or just before the matured fermented malt beverages are removed from the storage tank for filling.

When fermented malt beverages are treated by using activated charcoal as an adsorbent, some types of the beverages show significant decolorization effect. In the present invention, the color of fermented malt beverages is maintained greater or equal to at least 3.0 since the lowest color of commercially available beer or low-malt beer is 3.0 [EBC], and if the color is lower than 3.0, the color condition will be "pale in color, or no color". In order to maintain the color of fermented malt beverages, it is also possible to suppress the lowering of color using the malt with high color.

As for the extent of purine reduction in fermented malt beverages of the present invention, it is preferable that at least greater or equal to 90% of total purine compounds is removed, and it is more preferable that greater or equal to 95% is removed. In fermented malt beverages wherein greater or equal to 50% of total ingredient is malt (beer and the like), it is preferable that the total purine concentration is reduced to less or equal to 8 mg/l, or more preferable to 4 mg/l, and particularly to 2 mg/l, due to the high total content of purine compounds derived from malt. In the same manner, in fermented malt beverages wherein less than 50% of total ingredient is malt, it is preferable that the total purine concentration is reduced to less or equal to 4 mg/l, and more preferable to 2 mg/l. As a conventional method, a technique wherein nucleoside phosphorylase/nucleosidase is activated as an enzyme in beer wort, to assimilate purine bases to yeast has been published. According to this method, however, assimilation of the developed purine bases, particularly of guanine, to yeast cannot sufficiently be carried out and greater or equal to 20 mg/l of purine concentration including guanosine and guanine will remain. According to the process of the present invention, total purine compounds can be reduced even if they comprise only of guanine and guanosine, and fermented malt beverages with reduced concentration of purine compounds as mentioned above can be obtained.

On the other hand, in the adsorption treatment with an adsorbent such as activated charcoal and the like, malt with higher color (dark colored malt) can be used in advance in the present invention for the purpose of maintaining the color of wort, in the case where even a little adsorption of pigment cannot be avoided. Besides, a bitter component can be replenished after the treatment with an adsorbent in order to compensate the reduction of bitter component due to the treatment with an adsorbent.

The present invention will be further described in detail with reference to the following examples, while the scope of the present invention will not be limited to these examples.

### Example 1 [Measurement of the concentration of purine compounds in various types of commercially available beer and low-malt beer]

### (Method for measuring purine compounds)

Measurement was carried out according to the method of Fujimori et al. ("The content of purine compounds in alcoholic beverages", uric acid, vol.9, No.2, p.128, 1985), wherein a sample is degraded with 70% perchloric acid, and the amount of free purine bases is measured.

### (The content of purine compounds in various types of commercially available beer and low-malt beer)

As for the content of purine compounds in various types of commercially available beer and low-malt beer (nucleic acids, nucleotides, nucleosides and bases of purine are indicated as free purine bases), it was 60 - 110 mg/l in beer, and 20 - 30 mg/l in low-malt beer. As for beer, it almost coincides with the range disclosed in domestic re-publication of PCT international publication (for patent applications) WO96/25483. The amount of purine compounds contained in low-malt beer is 1/2 - 1/3 compared to beer, which is considered to be due to the difference in the proportion of malt used therein. Table 1 shows the content of purine compounds in various types of commercially available beer and low-malt beer.

**[Table 1]**

| Beer | Content (mg/l) | Low-malt beer | Content (mg/l) |
|---|---|---|---|
| A (commercial item) | 74 | E (commercial item) | 32 |
| B (commercial item) | 58 | F (commercial item) | 25 |
| C (commercial item) | 63 | G (commercial item) | 30 |
| D (commercial item) | 114 | H (commercial item) | 19 |

### Example 2 [Adsorption ability of purine compounds to activated charcoal]

### (Preparation of test purine compounds solution)

Solutions containing 30 mg/l, 80 mg/l, and 10 mg/l of three types of purine compounds, contained in large amount in beer, which are adenosine, guanosine and guanine, respectively were prepared. O.D. 260 in each solution is 1.61, 2.23 and 0.46, respectively. Since these can be converted to the above-mentioned concentration at the optical density of 260 nm, the concentration is shown as O.D.260 (optical density of 260 nm).

### (Adsorption ability of purine compounds to activated charcoal with various average pore diameters)

20 mg of activated charcoal having different average pore diameters (fine powder, palm husk) were added to 100 ml each of the above-mentioned three types of solution containing purine compounds, stirred at room temperature for 1 hour, filtrated and separated. Then O.D.260 of each filtrated solution was measured.

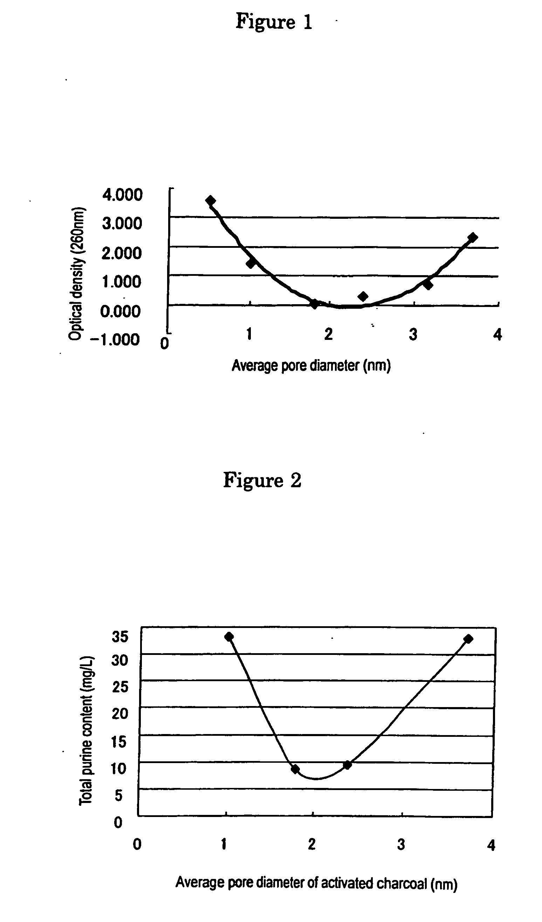

The relations between the optical density wherein three types of O.D. 260 values are summed and average pore diameters are shown in Fig. 1. Fig. 1 shows that the one with the average pore diameter of 1 - 3.5 nm efficiently adsorbs purine compounds.

### (The influence of the grain size of activated charcoal on adsorption ability of purine compounds)

Activated charcoal of various grain sizes with average pore diameter of 1.8 nm was prepared, and 20 mg of each activated charcoal was added to 100 ml of three types of solutions containing purine compounds in the same manner as mentioned above. Each of the solution was stirred at room temperature for 1 hour and filtrated, and then O.D. 260 of each filtrated solution was measured. The results are shown in the Table 2.

**[Table 2]**

| Grain size Mesh | Optical density of solutions after treatment with activated charcoal (O.D. 260nm) | | | |
|---|---|---|---|---|
| | Adenosine solution (30mg/L) | Guanosine solution (80mg/L) | Guanine solution (10mg/L) | Total |
| 330 Mesh passed | 0.019 | 0.090 | 0.031 | 0.140 |
| 100 Mesh passed | 0.092 | 0.194 | 0.080 | 0.366 |
| 60 - 140 Mesh | 0.279 | 0.962 | 0.097 | 1.338 |
| 32 - 60 Mesh | 1.559 | 1.808 | 0.204 | 3.571 |

The results of Table 2 show that activated charcoal in fine powder form which has larger surface area and larger contact area is preferable, and the grain size of 100 mesh passed is preferable.

### Example 3 [The adsorption ratio of purine compounds to various filtration auxiliary adsorbents]

As for the solution containing three types of purine compounds used in Example 2, 500 mg of filtration auxiliaries were added to 100ml each of the solution, stirred at room temperature for 1 hour, filtrated and separated, and then O.D. 260 of each filtrated solution was measured to examine the adsorption ability. Adsorption ratio was evaluated by the proportion of O.D. 260 before and after the treatment. The results are shown in the Table 3.

**[Table 3]**

| Filtration auxiliaries | Adsorption ratio (%) Adenosine | Adsorption ratio (%) Guanosine | Adsorption ratio (%) Guanine |
|---|---|---|---|
| Activated charcoal | 99 | 99 | 85 |
| PVPP (polyvinylpolypyrrolidone) | 11 | 19 | 94 |
| Perlite (Igneous rock) | 5 | 21 | 88 |

In this Example, activated charcoal of 100 mesh passed of Table 2 was used. In the case where activated charcoal was used as an adsorbent, the easiness of removing of the purine compounds was in the order of adenosine, guanosine > guanine, however, each of them has been sufficiently removed.

PVPP (polyvinylpolypyrrolidone), which is an adsorbent used for removing polyphenol in beer, adsorbs purine bases relatively well, while its adsorption ratio for purine nucleoside is low. As for silica gel, it showed almost the same adsorption ratio as PVPP. It is necessary to change the amount of adsorbent and, the pore diameter of grain size and the like. On the other hand, perlite (igneous rock) rarely adsorbs purine compounds.

### Example 4 [Adsorption of purine compounds by activated charcoal in beer and low-malt beer]

As for commercially available beer (wherein malt and adjuncts are used), 500 mg of activated charcoal in fine powder form with various average pore diameters was added to 100 ml of beer (the total content of purine compounds 72 mg/l), stirred at room temperature for 1 hour, filtrated and separated, and then total purine compounds in filtrated beer were measured to examine the adsorption ability. As shown in Fig. 2, the one with the average pore diameter of 1 - 3.5 nm showed high adsorption ability.

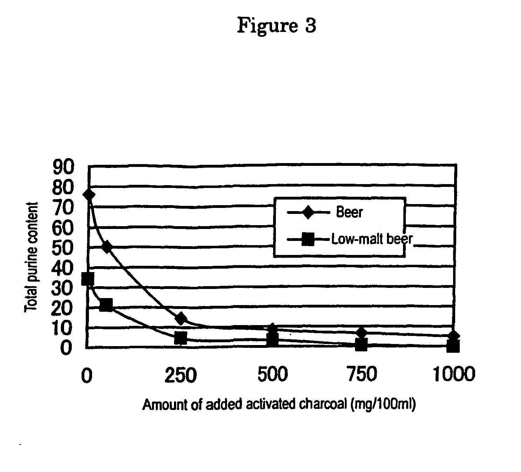

Further, the activated charcoal with the average pore diameter of 1.8 nm was selected and added to commercially available beer (wherein malt and adjuncts are used) and commercially available low-malt beer (malt content less or equal to 25%) in various amount of added activated charcoal to measure their adsorption abilities. The results are shown in Fig. 3. In the case where the activated charcoal of the average pore diameter of 1.8 nm was used, removal of 80% of total purine compounds was achieved by adding in the amount of 250 mg/100 ml, removal of greater or equal to 90% was achieved by adding in the amount of 500 mg/100 ml. As for other ingredient other than purine compounds, the comparison of before and after the treatment of activated charcoal (pore diameter 1.8 nm, added in the amount of 500 mg/100 ml of beer) was carried out. The results are shown in Table 4.

**[Table 4]**

| | Alcohol content (% V/V) | Color (EBC) | Bitterness Unit (EBC BU) | Total amino acid content (mg/l) |
|---|---|---|---|---|
| Beer before treatment | 4.30 | 8.0 | 24 | 690 |
| Beer after treatment | 4.24 | 5.2 | 1 | 610 |

The bitter component is removed though it does no affect the content of alcohol and amino acid. Further, approximately 1/3 of color component are also removed. Therefore, it is necessary to add a bitter component after the treatment of activated charcoal and to regulate in advance the amount of other bitter component necessary for fermentation and for flavor. Further, when it is preferred to maintain the color, it is possible to enhance color in advance by using dark colored malt or the like.

### Example 5 [Reduction of purine compounds in beer and low-malt beer by double treatment of activated charcoal]

As for commercially available low-malt beer (malt content less or equal to 25%), activated charcoal with the average pore diameter of 1.8 nm was selected and added in various additional amounts. Reduced amount of purine concentration when such treatment was repeated twice (2 steps) was measured. The results are shown in Table 5.

**[Table 5]**

| Experimental No. | Amount of added activated charcoal (mg/100ml of Beer/Low-malt beer) | | Total purine concentration after treatment | |
|---|---|---|---|---|
| | 1^{st} time | 2^{nd} time | Concentrat ion (mg/l) | Relative Ratio % |
| No.1 (Control) | 0 | 0 | 35.6 | 100 |
| No.2 | 350 | 0 | 1.2 | 3.4 |
| No.3 | 350 | 100 | 0.2 | 0.6 |
| No.4 | 350 | 200 | 0.1 | 0.3 |
| No.5 | 350 | 300 | 0.0 | 0.0 |
| No.6 | 450 | 0 | 0.6 | 1.7 |
| No.7 | 450 | 100 | 0.1 | 0.3 |
| No.8 | 450 | 200 | 0.0 | 0.0 |
| No.9 | 450 | 300 | 0.0 | 0.0 |

As shown in Table 5, it is possible to reduce efficiently purine compounds by adding in smaller amount by dividing the treatment into two steps. For example, when total amount of 450 mg/100 ml is added, removal rate in the double treatment (experimental No.3: First time 350 mg/100ml, Second time 100mg/100ml) was 99.7% in comparison to 98.3% of single treatment (experimental No.6). It is, therefore, more effective to divide a certain amount of activated charcoal before using it for treatment. Further, when it is intended to remove to the same extent, smaller amount of activated charcoal would be required for divided treatment. It is also possible to select accordingly, upon considering removal rate of other ingredient.

### Example 6 [Reduction of purine compounds by treatment of activated charcoal in maturation step]

With respect to ordinary beer fermented solution (wherein malt and adjuncts are used), the quality of final filtrated beer in the two cases i.e. in the case where activated charcoal is added when transferred to a storage tank of young beer (test M1), and in the case where activated charcoal was added 3 days before matured beer is removed from a storage tank for filling (test M2), was evaluated in comparison to the case where activated charcoal was not added (Control MC). 1.8 kl of beer-fermented solution is added to a 2 kl storage tank, and activated charcoal (grain size 100 mesh passed (100 - 330 mesh) the average pore diameter 1.8 nm) is added in slurry form (13.5 kg/801). In test M1, activated charcoal in slurry form is added in advance, and beer fermented solution is added, and then the whole solution is mixed. On the other hand, in test M2, the solution is mixed by stirring when activated charcoal in slurry form is added. Added activated charcoal will gradually precipitate, however, they are collected with precipitated yeast in the first current from a storage tank at the time of filling (or in test M1, activated charcoal can also be collected in advance from the bottom part when most of the activated charcoal has precipitated.) Filling beer is filtrated, and the chemically analyzed values regarding the final filtrated beer are shown in Table 6. Further, filtrated beer of test M1 and M2 wherein 10 mg/l of iso-α-acid is added are evaluated by sensory test together with Control MC. The results are shown in Table 7.

**[Table 6]**

| | Original wort extract *P | Color (EBC) | Bitterness unit (EBC BU) | Alcohol content (% V/V) | Total amino acid content (mg/l) | Total purine concentration (mg/L) |
|---|---|---|---|---|---|---|
| Test M1 | 11.3 | 5.3 | 2.1 | 5.0 | 55.1 | 1.1 |
| Test M2 | 11.2 | 5.5 | 2.8 | 4.9 | 57.2 | 1.6 |
| Control MC | 11.0 | 7.3 | 25.8 | 5.0 | 64.4 | 72.5 |

**[Table 7]**

| | Sensory Evaluation (Evaluation by 5 panelists) |
|---|---|
| Test M1 | Clear taste beer with brisk flavor |
| Test M2 | Clear taste beer with brisk flavor |
| Control MC | Beer with brisk bitterness and rich aroma |

Table 6 shows that total purine compound concentrations in both test M1 and M2 are reduced to 2% of Control MC (removal rate 98%), which result in the beer wherein most of total purine is removed. On the other hand, color is reduced by approximately 1/4, however, alcohol and extract remained almost the same. Since most of a bitter component has been removed, the final filtrated beer is fortified with a bitter component. The resultant beer has a good characteristic, i.e. clear taste beer with brisk flavor, as shown in Table 7. Most of activated charcoal precipitates by 3 days prior to filling to the extent that there is no substantial influence of filtration, however, it is preferable to decide when to add accordingly with respect to filterability.

### Industrial Applicability

The process of the present invention has a practically excellent effect for being able to remove selectively, efficiently and effectively purine compounds contained in fermented malt beverages by adopting a simple and easy treatment method with an adsorbent such as activated charcoal in the production steps of fermented malt beverages such as beer, low-malt beer and the like. In particular, with the process of the present invention, it is possible to remove comprehensively purine compounds, and to remove effectively even purine nucleosides in wort that are difficult to be assimilated by yeast. The present invention, therefore, provides dominant means to develop fermented malt beverages with reduced content of purine compounds.

## Claims

1. A process for producing fermented malt beverages with reduced content of purine compounds wherein at least 90% or more of total purine compounds in the fermented malt beverages are selectively adsorbed and removed with activated charcoal with average pore diameter of 1 - 3.5 nm which selectively adsorbs purine compounds in the production steps of the fermented malt beverages.

2. The process for producing the fermented malt beverages with reduced content of the purine compounds according to claim 1, wherein the grain size of the activated charcoal is 100 mesh passed.

3. The process for producing fermented malt beverages with reduced content of the purine compounds according to claim 1, wherein the treatment to adsorb the purine compounds selectively with the activated charcoal in the production steps of the fermented malt beverages is carried out in a maturation step of fermented wort in a storage tank.

4. The process for producing fermented malt beverages with reduced content of the purine compounds according to any one of claims 1 to 3, wherein dark coloured malt is used for the production of the fermented malt beverages.

5. The process for producing the fermented malt beverages with reduced content of the purine compounds according to any one of claims 1 to 4, wherein a bitter component is replenished after the treatment with the activated charcoal which selectively adsorbs purine compounds.

## Patentansprüche

1. Verfahren zur Herstellung von fermentierten Malzgetränken mit reduziertem Gehalt an Purinverbindungen, wobei mindestens 90 % oder mehr der gesamten Purinverbindungen in den fermentierten Malzgetränken mit Aktivkohle mit einem durchschnittlichen Porendurchmesser von 1 bis 3,5 nm selektiv adsorbiert und entfernt wird, wobei die Aktivkohle die Purinverbindungen in den Herstellungsschritten der fermentierten Malzgetränke selektiv adsorbiert.

2. Verfahren zur Herstellung von fermentierten Malzgetränken mit reduziertem Gehalt an Purinverbindungen gemäß Anspruch 1, wobei die Körner der Aktivkohle eine Größe haben, die es ihnen erlaubt, 100 mesh zu passieren.

3. Verfahren zur Herstellung fermentierter Malzgetränke mit reduziertem Gehalt an Purinverbindungen gemäß Anspruch 1, wobei die Behandlung zur selektiven Adsorption der Purinverbindungen mit Aktivkohle in den Herstellungsschritten der fermentierten Malzgetränke in einem Reifungsschritt von fermentierter Stammwürze in einem Lagertank durchgeführt wird.

4. Verfahren zur Herstellung fermentierter Malzgetränke mit reduziertem Gehalt an Purinverbindungen gemäß einem der Ansprüche 1 bis 3, wobei dunkel gefärbtes Malz zur Herstellung von fermentierten Malzgetränken verwendet wird.

5. Verfahren zur Herstellung fermentierter Malzgetränke mit reduziertem Gehalt an Purinverbindungen gemäß einem der Ansprüche 1 bis 4, wobei eine Bitterkomponente nach der Behandlung mit Aktivkohle, die Purinverbindungen selektiv adsorbiert, ergänzt wird.

## Revendications

1. Processus destiné à produire des boissons fermentées à base de malt avec une teneur réduite en composés de purine où au moins 90% ou plus de composés totaux de purine dans les boissons fermentées à base de malt sont adsorbés et retirés de manière sélective avec du charbon actif ayant un diamètre de pore moyen de 1-3,5 nm, lequel charbon actif adsorbe de manière sélective des composés de purine aux étapes de production des boissons fermentées à base de malt.

2. Processus pour produire les boissons fermentées à base de malt avec une teneur réduite en composés de purine selon la revendication 1, où la taille des grains du charbon actif est de plus de 100 Mesh.

3. Processus pour produire des boissons fermentées à base de malt avec une teneur réduite en composés de purine selon la revendication 1, où le traitement pour adsorber les composés de purine de manière sélective avec le charbon actif aux étapes de production des boissons fermentées à base de malt est exécuté à une étape de maturation de moût fermenté dans un réservoir de stockage.

4. Processus pour produire des boissons fermentées à base de malt avec une teneur réduite en composés de purine selon l'une quelconque des revendications 1 à 3, où le malt foncé coloré est utilisé pour la production des boissons fermentées à base de malt.

5. Processus pour produire les boissons fermentées à base de malt avec une teneur réduite en composés de purine selon l'une quelconque des revendications 1 à 4, où un composé amer est reconstitué après le traitement avec le charbon actif qui adsorbe de manière sélective des composés de purine.
